# DEMANDE DE BREVET EUROPEEN

(11) **EP 0 550 297 A2**
(43) Date de publication de la demande: **07.07.1993**
(21) Numéro de dépôt: 92403210.5
(22) Date de dépôt: 27.11.1992
(51) Int. Cl.: B01D 24/04, B01D 24/00

(54) **Filtre pour métal en fusion constitué par des plaques trouées en matière réfractaire**

(30) Priorité: 04.12.1991 FR 9115003
(71) Demandeur: DAUSSAN ET COMPAGNIE, F-57140 Woippy (FR)
(72) Inventeur: Daussan, Jean-Charles, F-57000 Metz (FR); Daussan, Gérard, F-57050 Longeville-les-Metz (FR); Daussan, André, F-57050 Longeville-les-Metz (FR)
(74) Mandataire: Keib, Gérard

(57) **Abrégé**

Le filtre pour métal en fusion comprend une série d'au moins deux plaques (1 et 2) ou (1, 2, 3, 4) en matière réfractaire, en contact les unes avec les autres par leur périphérie inférieure (1b, 2b, 3b ou 4b) et leur périphérie supérieure (2a, 3a, 4a ou 1a) et définissant entre elles des cavités (5) ou (5, 6, 6a), ces plaques comportant des trous (7) permettant le passage et la filtration du métal en fusion, lesdites cavités (5, 6, 6a) étant au moins en partie remplies d'une matière filtrante (8) résistant à la température du métal en fusion à filtrer et assurant une filtration complémentaire dudit métal.

La matière filtrante (8) est à base de fibres résistant à la température du métal en fusion.

Utilisation pour filtrer les métaux en fusion.

## Description

La présente invention concerne un filtre pour métal en fusion, comprenant au moins deux plaques en matière réfractaire, en contact les unes avec les autres par leur périphérie et définissant entre elles une ou plusieurs cavités, ces plaques comportant chacune une série de trous permettant le passage et la filtration du métal liquide.

Un tel filtre a été décrit dans le brevet français 2 593 077.

Un tel filtre permet d'éliminer du métal en fusion toute inclusion solide par exemple d'oxyde métallique susceptible d'affecter la qualité du métal qui est coulé dans un récipient tel qu'une lingotière ou un moule.

L'efficacité d'un tel filtre dépend essentiellement du diamètre des trous et du nombre de plaques qui le compose. Ainsi plus le diamètre des trous est faible, plus le filtre est capable de retenir des inclusions fines et meilleure sera la filtration.

Cependant, il est pratiquement impossible de réaliser la filtration au moyen de plaques dont les trous ont un diamètre inférieur à 1 mm.

En effet, de tels trous sont difficiles à réaliser dans une matière réfractaire ou céramique par exemple en alumine moulée.

De plus, lorsque les trous ont un diamètre inférieur à 1 mm, la filtration devient très longue (le métal en fusion passe difficilement à travers de tels trous) et ces trous se colmatent rapidement.

Lorsqu'on augmente le nombre de plaques à trous, le filtre devient plus onéreux.

Par ailleurs, il est connu de disposer à l'intérieur des cavités précitées une matière filtrante sous forme de particules ayant, au moins pour celles situées au voisinage d'une plaque, une dimension supérieure au diamètre des trous de cette plaque. Ces particules ne peuvent pas passer par ces trous, et définissent entre elles des interstices que traverse le métal en fusion à filtrer.

Ce qui a été dit plus haut sur le diamètre des trous ménagés dans les plaques s'applique aux interstices entre les particules.

Le but de la présente invention est de remédier aux inconvénients des filtres ci-dessus, en créant un filtre plus efficace, tout en étant économique.

L'invention vise ainsi un filtre pour métal en fusion comprenant au moins deux plaques en matière réfractaire, en contact les unes avec les autres par leur périphérie et définissant entre elles une ou plusieurs cavités, ces plaques comportant chacune une série de trous permettant le passage et la filtration du métal en fusion, lesdites cavités étant au moins en partie remplies d'une matière filtrante résistant à la température du métal en fusion à filtrer et assurant une filtration complémentaire dudit métal.

Suivant l'invention, la matière filtrante est à base de fibres résistant à la température du métal en fusion.

La matière fibreuse disposée dans les cavités ménagées entre les plaques permet d'améliorer l'efficacité de la filtration, en retenant notamment des particules très fines qui ne sont pas retenues par les plaques à trous.

Ainsi, les plaques peuvent présenter des trous de diamètre supérieur à 1 mm faciles à réaliser mais incapables de filtrer les inclusions fines.

De ce fait, les plaques à trous jouent dans l'invention une fonction de préfiltres et de support pour confiner les fibres de façon à définir au sein de la matière fibreuse un trajet filtrant particulièrement efficace pour retenir les particules les plus fines.

L'efficacité filtrante du matelas en matière fibreuse compris entre les plaques à trous peut s'expliquer de la façon suivante :
- les fibres définissent entre elles des passages très réduits qui retiennent efficacement les inclusions solides,
- cette aptitude à retenir les inclusions est renforcée par le fait que le trajet du métal à travers la matière fibreuse est plus grand qu'à travers les trous des plaques,
- les fibres retiennent les particules par effet de capillarité,
- les fibres sont relativement mobiles les unes par rapport aux autres, de sorte que le passage du métal les met en mouvement, ce qui produit un effet d'autodécolmatage particulièrement bénéfique.

D'autres particularités et avantages de l'invention apparaîtront encore dans la description ci-après.

Aux dessins annexés donnés à titre d'exemples non limitatifs :
- la figure 1 est une vue en coupe longitudinale d'un filtre conforme à l'invention,
- la figure 2 est une vue en plan du filtre.

Dans la réalisation des figures annexées, le filtre pour métal en fusion, comprend une série de plaques 1, 2, 3, 4 en matière réfractaire telle que de l'alumine, en contact les unes avec les autres, par leur périphérie 1a, 2a, 3a et définissant entre elles des cavités 5, 6, 6a, l'accouplement de ces plaques étant interchangeable.

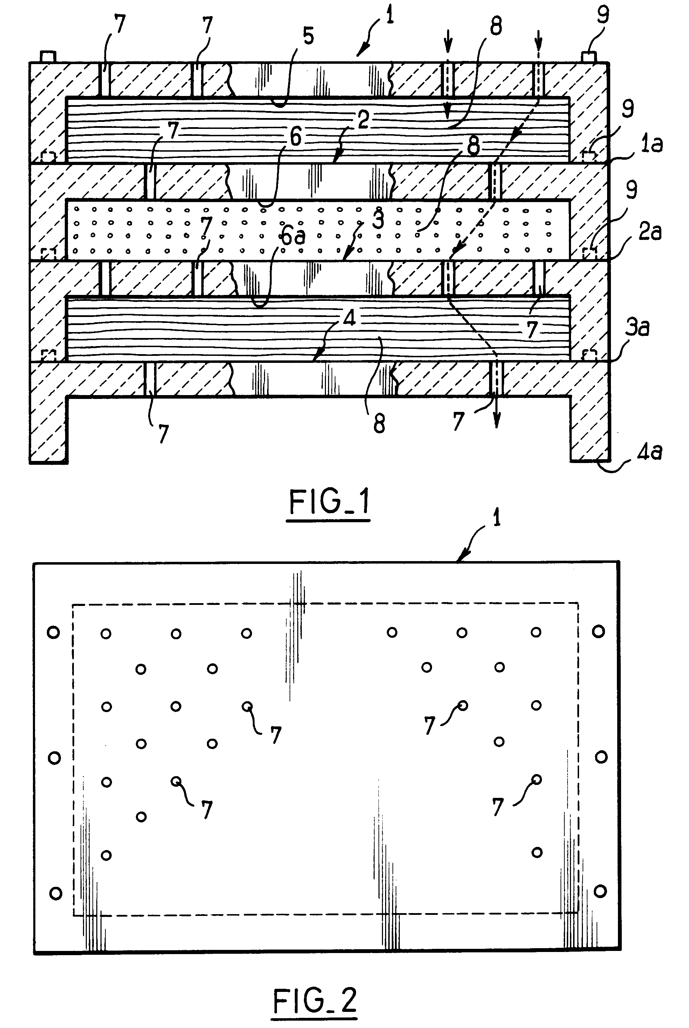

Ces plaques 1, 2, 3, 4 comportent chacune une série de trous 7 permettant le passage (voir flèches sur la figure 1) et la filtration du métal en fusion.

Conformément à l'invention, les cavités 5, 6, 6a sont au moins en partie remplies d'une matière composée de fibres 8 résistant à la température du métal à filtrer, assurant une filtration complémentaire du métal.

Dans l'exemple représenté, la matière fibreuse 8 est constituée par des fibres non liées entre elles et s'étendant parallèlement auxdites plaques, soit dans le sens de leur longueur, soit dans le sens de leur largeur. Le sens des fibres 8 peut d'ailleurs être inversé d'une cavité à l'autre, comme indiqué sur la figure 1.

De préférence, le diamètre des fibres est de l'ordre de 4 µm et plus. En effet, des fibres de diamètre inférieur à cette valeur sont insalubres et sont trop fragiles et formeraient de la poussière susceptible de colmater le filtre et de polluer le métal.

Par ailleurs, le diamètre des trous 7 des plaques 1, 2, 3, 4 est de préférence compris entre 1 et 5 mm.

D'autre part, les trous 7 de l'une quelconque des plaques sont de préférence en quinconce par rapport aux trous de la plaque voisine, comme indiqué sur la figure 1.

La distance comprise entre chaque paire de plaques 1, 2, 3, 4 est de préférence supérieure à 3 mm, ce qui permet de réaliser entre ces plaques des cavités ayant un volume suffisant pour recevoir plusieurs couches de fibres.

Dans les réalisations représentées, chaque plaque 1, 2, 3, 4 comporte une bordure périphérique 1a, 2a, 3a en contact avec une plaque voisine et définissant ladite cavité 5, 6, 6a avec cette plaque voisine. Ces bordures 1a, 2a, 3a ou 4a peuvent être liées aux plaques voisines au moyen d'un liant résistant aux températures entrant en jeu, l'ordre d'accouplement de ces plaques étant interchangeables. Pour faciliter le centrage des plaques 1, 2, 3, 4 les unes avec les autres, la périphérie de celles-ci comporte avantageusement au moins deux bossages 9 engagés dans des ouvertures complémentaires.

Les fibres minérales peuvent être choisies, par exemple, parmi la laine de roche, de basalte, de verre, de scories de haut-fourneau, des fibres céramiques telles que des fibres alumineuses ou silico-alumineuses.

La matière fibreuse peut également être constituée de fibres tissées dont les mailles sont perméables au métal liquide, ou se présenter sous la forme d'une éponge constituée de matières spongieuses et/ou de fibres ou de fils, de granules, de grains ou leurs mélanges en métal ou en matière minérale enduite de matière résistant aux températures du métal coulé.

Dans le cas de la filtration d'un métal ayant un bas point de fusion tel que l'aluminium, les fibres peuvent également être constituées par un métal ayant un point de fusion supérieur à celui de l'aluminium, telles que des fibres ou un tissu en acier inoxydable.

Lors de la filtration le métal emprunte le trajet indiqué par des flèches en pointillé sur la figure 1 et sur la figure 3.

Les fibres 8 disposées dans les cavités 5, 6, 6a augmentent considérablement le pouvoir filtrant du filtre. En particulier, le matelas de fibres 8 retient des particules solides de dimensions nettement inférieures à celles des trous 7. Ces trous 7 jouent ainsi seulement le rôle de préfiltre grossier pour retenir les particules les plus grosses.

Le matelas de fibres 8 compris entre les plaques 1, 2, 3 peut être remplacé périodiquement par un matelas neuf.

De préférence, cependant l'ensemble du filtre est jeté après chaque filtration et remplacé par un filtre neuf.

Le pouvoir filtrant du filtre selon l'invention dépend également de l'état plus ou moins tassé du matelas fibreux ou des couches de tissu compris entre les plaques.

Ainsi, si l'on veut réaliser une filtration très fine, on utilisera des matelas de fibres 8 relativement comprimés entre les plaques 1, 2, 3. En revanche, si la filtration n'a pas besoin d'être fine, le matelas de fibres 8 pourra être relativement lâche et même n'occuper qu'une partie de la hauteur des cavités 5, 6, 6a comprises entre les plaques.

Pour faciliter l'insertion du matelas fibreux 8 dans les cavités 5, 6, 6a celui-ci sera de préférence préformé c'est-à-dire prédécoupé de façon à correspondre assez exactement aux dimensions des cavités. Le rapport entre l'épaisseur initiale du matelas fibreux 8 et la hauteur des cavités déterminera l'état de compression du matelas fibreux entre les plaques.

Bien entendu, l'invention n'est pas limitée aux exemples de réalisation que l'on vient de décrire et on peut apporter à ceux-ci de nombreuses modifications sans sortir du cadre de l'invention.

Ainsi, le nombre de plaques peut être réduit à deux. Dans ce cas, ces deux plaques définissent entre elles seulement une cavité remplie de fibres ou d'une éponge filtrante.

## Revendications

1. Filtre pour métal en fusion comprenant une série d'au moins deux plaques (1, 2, 3, 4) en matière réfractaire, en contact les unes avec les autres par leur périphérie et définissant entre elles une ou plusieurs cavités (5, 6, 6a), ces plaques comportant chacune une série de trous (7) permettant le passage et la filtration du métal en fusion, lesdites cavités (5, 6, 6a) étant au moins en partie remplies d'une matière filtrante (8) résistant à la température du métal en fusion à filtrer et assurant une filtration complémentaire dudit métal, caractérisé en ce que la matière filtrante (8) est à base de fibres résistant à la température du métal en fusion.

2. Filtre conforme à la revendication 1, caractérisé en ce que ladite matière filtrante fibreuse (8) est constituée par des fibres non liées entre elles et s'étendant parallèlement auxdites plaques (1, 2, 3, 4).

3. Filtre conforme à la revendication 1, caractérisé en ce que le diamètre des fibres (8) est de l'ordre de 4 µm et plus.

4. Filtre conforme à l'une des revendications 1 à 3, caractérisé en ce que le diamètre des trous (7) des plaques (1, 2, 3, 4) est compris entre 1 et 5 mm.

5. Filtre conforme à l'une des revendications 1 à 4, caractérisé en ce que les trous (7) de l'une quelconque des plaques (1, 2, 3, 4) sont disposés en quinconce par rapport aux trous (7) de la plaque voisine.

6. Filtre conforme à l'une des revendications 1 à 5, caractérisé en ce que la distance comprise entre chaque paire de plaques (1, 2, 3, 4) est supérieure à 3 mm.

7. Filtre conforme à l'une des revendications 1 à 6, chaque plaque (1, 2, 3, 4) comportant une bordure périphérique (1a, 2a, 3a, 4a) en contact avec la plaque voisine, caractérisé en ce que ladite bordure est liée à la plaque voisine au moyen d'un liant résistant aux températures en jeu.

8. Filtre conforme à l'une des revendications 1 à 7, caractérisé en ce que la matière fibreuse (8) est de la laine minérale.

9. Filtre conforme à la revendication 1, caractérisé en ce que la matière fibreuse est constituée de fibres tissées dont les mailles sont perméables au métal liquide.

10. Filtre conforme à l'une des revendications 1 à 8, caractérisé en ce que la matière fibreuse est sous la forme d'une éponge constituée de fibres ou de fils en matière réfractaire.

11. Filtre conforme à l'une quelconque des revendications 1 à 10, caractérisé en ce que la matière fibreuse (8) comporte également un matériau granulaire résistant à la température du métal en fusion à filtrer.

12. Filtre conforme aux revendication 10 et 11, caractérisé en ce que ladite matière est sous forme d'éponge constituée de fibres, de fils, de grains, de granules ou de leur mélange, en matière métallique et/ou minérale enduite de matière résistant aux températures du métal coulé.

13. Filtre conforme à l'une des revendications 1 à 12, caractérisé en ce que les fibres (8) occupent sensiblement tout le volume des cavités (5, 6, 6a).

14. Filtre conforme à l'une des revendications 1 à 13, caractérisé en ce que les fibres (8) sont comprimées entre les plaques (1, 2, 3).
